(19) Europäisches Patentamt
European Patent Office
Office européen des brevets

(11) EP 2 306 831 B1

(12) EUROPEAN PATENT SPECIFICATION

(45) Date of publication and mention of the grant of the patent:
**28.03.2018 Bulletin 2018/13**

(21) Application number: **09787999.3**

(22) Date of filing: **17.07.2009**

(51) Int Cl.:
***A01N 43/56*** (2006.01) ***A01N 25/30*** (2006.01)
***A01P 7/04*** (2006.01) ***A01P 7/02*** (2006.01)
***A01P 5/00*** (2006.01) ***A01P 9/00*** (2006.01)

(86) International application number:
**PCT/JP2009/063300**

(87) International publication number:
**WO 2010/010958 (28.01.2010 Gazette 2010/04)**

# (54) PESTICIDAL COMPOSITION

PESTIZIDE ZUSAMMENSETZUNG

COMPOSITION PESTICIDE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **24.07.2008 JP 2008191341**

(43) Date of publication of application:
**13.04.2011 Bulletin 2011/15**

(73) Proprietor: **ISHIHARA SANGYO KAISHA, LTD.**
**Osaka-shi**
**Osaka 550-0002 (JP)**

(72) Inventor: **HAMAMOTO, Taku**
**Kusatsu-shi**
**Shiga 525-0025 (JP)**

(74) Representative: **Hartz, Nikolai**
**Wächtershäuser & Hartz**
**Patentanwaltspartnerschaft mbB**
**Weinstrasse 8**
**80333 München (DE)**

(56) References cited:
**EP-A1- 0 252 824**
**EP-A1- 1 717 237**
**WO-A1-2006/080311**
**WO-A1-2007/020877**
**WO-A1-2009/002856**
**WO-A2-2006/040113**
**WO-A2-2009/113712**
**GB-A- 2 157 952**
**US-A- 4 770 694**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 306 831 B1

**Description**

TECHNICAL FIELD

The present invention relates to a method for improving the pesticidal effects of an anthranilamide compound or its salt by means of a polyoxyalkylene phosphoric acid ester surfactant.

BACKGROUND ART

An anthranilamide compound is known to be useful for controlling a pest such as Lepidoptera, and Patent Document 1 discloses, as its formulations, various ones such as an emulsifiable concentrate, a wettable powder, a dust, water dispersible granules, etc. Further Patent Document 2 discloses a suspension concentrate containing a hydrophobic solvent, as a formulation to enhance the controlling effects of an anthranilamide compound against pests.

CITATION LIST

PATENT DOCUMENT

Patent Document 1: WO2005/077934
Patent Document 2: WO2007/081553

WO2009/113712 A2, which is prior art according to Art. 54(3) EPC, as well as WO 2009/002856 A1, EP 1717237 A1, WO 2007/020877 A1, WO 2006/080311 A1 and WO 2006/040113 A2 disclose anthranilamide compounds for controlling a pest. EP 252824 A1 discloses phosphoric acid ester-based compositions. US 4,770,694 discloses aqueous biocide suspensions. GB 2157952 A discloses activators for biocides.

SUMMARY OF INVENTION

TECHNICAL PROBLEM

Many pesticides including anthranilamide compounds respectively have characteristics in the spectra and effects. On the other hand, they are inadequate In the effects against specific pests, or their residual effects are so short that the effects for a certain period cannot be expected, and in some applications, no adequate controlling effects can practically be obtained. Accordingly, it is desired to improve the controlling effects by some formulation techniques.

SOLUTION TO THE PROBLEM

The present inventors have conducted various studies to solve the above problem and as a result, have found it possible to remarkably improve the pesticidal effects of an anthranilamide compound or its salt by adding a polyoxyalkylene phosphoric acid ester surfactant. Thus, the present invention has been accomplished.

That is, the present invention provides a method for improving the pesticidal effects of an anthranilamide compound or its salt by means of a polyoxyalkylene phosphoric acid ester surfactant according to claims 1 to 4.

ADVANTAGEOUS EFFECTS OF INVENTION

The present invention is to improve the pesticidal effects of an anthranilamide compound and to make it possible to control a pest at a lower dose. Further, as the application amount of the agent can be reduced by the present invention, it is possible to remarkably reduce the environmental load in the applied area or in its peripheral area.

BEST MODE FOR CARRYING OUT THE INVENTION

The pesticidal composition used in the present invention is one comprising an anthranilamide compound or its salt, and a polyoxyalkylene phosphoric acid ester surfactant. The pesticidal composition may be used, for example, in such a manner that (1) the anthranilamide compound or its salt is formulated together with various adjuvants, and then, the formulation is applied as diluted with e.g. water together with the polyoxyalkylene phosphoric acid ester surfactant, or (2) the anthranilamide compound or its salt, and the polyoxyalkylene phosphoric acid ester surfactant were formulated

together with various adjuvants, and the formulation is applied as diluted or not diluted with e.g. water.

In the present invention, the anthranilamide compound or its salt is

(1) 3-Bromo-N-(2-bromo-4-chloro-6-(1-cyclopropylethylcarbamoyl)phenyl)-1-(3-chloropyridin-2-yl)-1H-pyrazole-5-carboxamide (Compound 1)
(2) 3-Bromo-N-(4-chloro-2-(1-cyclopropylethylcarbamoyl)-6-methylphenyl)-1-(3-chloropyridin-2-yl)-1H-pyrazole-5-carboxamide (Compound 2)
(3) 3-Bromo-N-(2-bromo-4-chloro-6-(cyclopropylmethylcarbamoyl)phenyl)-1-(3-chloropyridin-2-yl)-1H-pyrazole-5-carboxamide (Compound 3)
(4) 3-Bromo-N-(4-chloro-2-methyl-6-(methylcarbamoyl)phenyl)-1-(3-chloropyridin-2-yl)-1H-pyrazole-5-carboxamide (Compound 4)
(5) 3-Bromo-1-(3-chloropyridin-2-yl)-N-(4-cyano-2-methyl-6-(methylcarbamoyl)phenyl)-1H-pyrazole-5-carboxamide (Compound 5)

In the present invention, the polyoxyalkylene phosphoric acid ester surfactant is a polyoxyalkylene alkyl ether phosphoric acid ester or its salt, or a polyoxyalkylene aryl ether phosphoric acid ester or its salt.

The polyoxyalkylene alkyl ether phosphoric acid ester or polyoxyalkylene aryl ether phosphoric acid ester may, for example, be a monopolyoxyalkylene alkyl ether phosphoric acid ester or monopolyoxyalkylene aryl ether phosphoric acid ester, a dipolyoxyalkylene alkyl ether phosphoric acid ester or dipolyoxyalkylene aryl ether phosphoric acid ester, or a tripolyoxyalkylene alkyl ether phosphoric acid ester or tripolyoxyalkylene aryl ether phosphoric acid ester, having 1 to 3 polyoxyalkylene alkyl ether moieties or polyoxyalkylene aryl ether moieties bonded to a phosphorus atom. When a plurality of polyoxyalkylene alkyl ether moieties or polyoxyalkylene aryl ether moieties are bonded to a phosphorus atom, they may be the same or different. In the present invention, the above-mentioned ones may be used in an optional combination.

In the present invention, the alkyl moiety in the polyoxyalkylene alkyl ether phosphoric acid ester may be linear or branched, and the number of carbon atoms therein may, for example, be preferably from 8 to 20. Its specific example may, for example, be octyl, nonyl, decyl, undecyl, dodecyl, tridecyl, tetradecyl, pentadecyl, hexadecyl, heptadecyl, octadecyl, nonadecyl or icocyl.

In the present invention, the aryl moiety in the polyoxyalkylene aryl ether phosphoric acid ester is phenyl which may be substituted by alkyl. The number of alkyl substituted in this case may be one or more. Further, the alkyl as a substituent may be linear or branched, and the number of carbon atoms therein is, for example, preferably from 8 to 20. Its specific example may, for example, be octyl, nonyl, decyl, undecyl, dodecyl, tridecyl, tetradecyl, pentadecyl, hexadecyl, heptadecyl, octadecyl, nonadecyl or icocyl. Among them, octyl, nonyl or decyl is preferred.

In the present invention, the number of addition of alkylene oxide moieties in the polyoxyalkylene alkyl ether phosphoric acid ester or polyoxyalkylene aryl ether phosphoric acid ester is from about 1 to 50, preferably from about 1 to 20. Further, the alkylene oxide moiety in the polyoxyalkylene alkyl ether phosphoric acid ester or polyoxyalkylene aryl ether phosphoric acid ester may be linear or branched, and the number of carbon atoms therein may, for example, be preferably from 2 to 3. Its specific example may, for example, be ethylene oxide, propylene oxide or $-CH(CH_3)CH_2O-$. It may be a copolymer or a block copolymer thereof. Further, the substitution position of the alkylene oxide moiety is not particularly limited.

In the present invention, the salt of a polyoxyalkylene alkyl ether phosphoric acid ester or the salt of a polyoxyalkylene aryl ether phosphoric acid ester may be various ones. For example, it may be a salt with an alkali metal such as sodium or potassium; a salt with an alkaline earth metal such as magnesium or calcium; or an amine salt such as $NH_4^+$, a salt with monoethanolamine, a salt with diethanolamine, a salt with triethanolamine, a salt with trimethylamine, a salt with triethylamine, a salt with tributylamine, a salt with diisopropylethylamine or a salt with morpholine. In the present invention, the chemical structure of the polyoxyalkylene alkyl ether phosphoric acid ester or polyoxyalkylene aryl ether phosphoric acid ester is represented by the following formula (II), (III) or (IV).

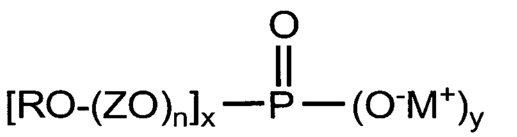

(II)

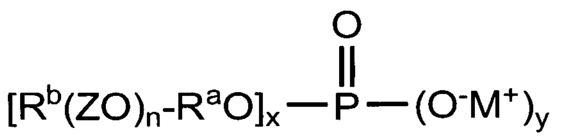

(III)

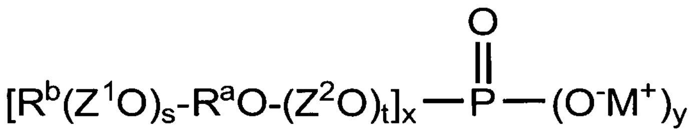

(IV)

wherein each of R and $R^b$ which are independent of each other, is alkyl or phenyl which may be substituted by alkyl, each of $R^a$, Z, $Z^1$ and $Z^2$ which are independent of one another, is alkylene, $M^+$ is a hydrogen ion, a metal ion, ammonium or organic ammonium, each of n, s and t which are independent of one another, is an integer of at least 1, x and y satisfy x+y=3, and x is an integer of 1, 2 or 3, and y is an integer of 0, 1 or 2. When x is at least 2, a plurality of R, $R^a$, $R^b$, Z, $Z^1$, $Z^2$ or n contained in $[RO(ZO)_n]$, $[R^b(ZO)_nR^aO]$ or $[R^b(Z^1O)_sR^aO(Z^2O)_t]$ may be the same or different from one another. When y is 2, the two $M^+$ may be the same or different from each other. In the formula (IV), $Z^1$ and $Z^2$ may be the same or different from each other.

In the present invention, another name for a polyoxyalkylene alkyl ether phosphoric acid ester or its salt may, for example, be a phosphate ester of alkoxylated alcohol or its salt, a phosphated alcohol alkoxylate or its salt, or a (polyoxyalkylene alcohol) phosphate or its salt. All of them are contained in the polyoxyalkylene alkyl ether phosphoric acid ester or its salt used in the present invention, and the present invention is not limited thereto.

It is possible to use a surfactant containing the polyoxyalkylene alkyl ether phosphoric acid ester or its salt. As its specific examples, the following ones may, for example, be mentioned.

- Manufactured by Nikko Chemicals Co., Ltd., tradenames: NIKKOL DLP-10, NIKKOL DOP-8NV, NIKKOL DDP-2, NIKKOL DDP-4, NIKKOL DDP-6, NIKKOL DDP-8, NIKKOL DDP-10, NIKKOL TLP-4, NIKKOL TCP-5, NIKKOL TDP-2, NIKKOL TDP-6, NIKKOL TDP-8, NIKKOL TDP-10, etc.
- Manufactured by Dai-ichi Kogyo Seiyaku Co., Ltd., tradenames: PLYSURF A212C, PLYSURF A215C, PLYSURF A208B, PLYSURF A219B, etc.
- Manufactured by Toho Chemical Industry Co., Ltd., tradenames: PHOSPHANOL ED-200, PHOSPHANOL RA-600, PHOSPHANOL ML-220, PHOSPHANOL ML-240, PHOSPHANOL RD-510Y, PHOSPHANOL RS-410, PHOSPHANOL RS-610, PHOSPHANOL RS-710, PHOSPHANOL RL-210, PHOSPHANOL RL-310, PHOSPHANOL RB-410, PHOSPHANOL RS-610NA, PHOSPHANOL SC-6103, PHOSPHANOL RS-710M, PHOSPHANOL GB-520, PHOSPHANOL RD-720, etc.
- Manufactured by ADEKA, tradenames; ADEKA COL PS-440E, ADEKA COL PS-509E, ADEKA COL PS-807, ADEKA COL PS-810, ADEKA COL PS-984,etc.
- Manufactured by AKZO NOVEL, tradenames: PHOSPHOLAN 5AP, PHOSPHOLAN PS-131, PHOSPHOLAN PS-220, PHOSPHOLAN PS-222, PHOSPHOLAN PS-236, PHOSPHOLAN PS-331, PHOSPHOLAN PS-810, PHOSPHOLAN PS-900, etc.
- Manufactured by Cognis Deutschland GmbH Co. & KG, tradenames: AGNIQUE PE 23-5, AGNIQUE PE 25-5, AGNIQUE PE 25-5K, AGNIQUE PE 28-5N, Crafol AP 67, etc.
  It is possible to use a surfactant containing the polyoxyalkylene aryl ether phosphoric acid ester or its salt, and a sodium salt, ammonium salt or alkanolamine salt of polyoxyethylene nonylphenyl ether phosphoric acid ester; or a sodium salt, ammonium salt or alkanolamine salt of polyoxyethylene styrylphenyl ether phosphoric acid ester may, for example, be mentioned. As its specific examples, the following ones may, for example, be mentioned.
- Manufactured by ADEKA, tradenames; ADEKA COL CS-141E; ADEKA, tradenames; ADEKA COL CS-1361E; ADEKA, tradenames; ADEKA COL TS-230E; ADEKA, tradenames; ADEKA COL CS-279, etc.

The present invention provides distinct controlling effects against various pests such as arthropods including agriculturally or horticulturally noxious insects and mites; nematodes; and soil pests, or against parasites on animals. Namely, the present invention is applicable to a pesticidal agent such as an insecticide, a miticide, a nematicide or a soil pesticide, a fungicide, or an agent for controlling parasites on animals. For example, it is effective for controlling plant parasitic mites such as two-spotted spider mite (Tetranychus urticae), carmine spider mite (Tetranychus cinnabarinus), kanzawa spider mite (Tetranychus kanzawai), citrus red mite (Panonychus citri), European red mite (Panonychus ulmi), broad mite (Polyphagotarsonemus latus), pink citrus rust mite (Aculops pelekassi) and bulb mite (Rhizoglyphus echinopus); aphids such as green peach aphid (Myzus persicae) and cotton aphid (Aphis gossypii); agricultural insect

pests such as diamondback moth (Plutella xylostella), cabbage armyworm (Mamestra brassicae), common cutworm (Spodoptera litura), codling moth (Laspeyresia pomonella), bollworm (Heliothis zea), tobacco budworm (Heliothis virescens), gypsy moth (Lymantria dispar), rice leafroller (Cnaphalocrocis medinalis), Adoxophyes sp., colorado potato beetle (Leptinotarsa decemlineata), cucurbit leaf beetle (Aulacophora femoralis), boll weevil (Anthonomus grandis), planthoppers, leafhoppers, scales, bugs, whiteflies, thrips, grasshoppers, leaf miners, anthomyiid flies, scarabs, black cutworm (Agrotis ipsilon), cutworm (Agrotis segetum) and ants; plant parasitic nematodes such as root-knot nematodes, cyst nematodes, root-lesion nematodes, rice white-tip nematode (Aphelenchoides besseyi), strawberry bud nematode (Nothotylenchus acris), pine wood nematode (Bursaphelenchus lignicolus); gastropods such as slugs and snails; soil pests such as isopods such as pillbugs (Armadilidium vulgare) and pillbugs (Porcellio scaber); hygienic insect pests such as tropical rat mite (Ornithonyssus bacoti), cockroachs, housefly (Musca domestica) and house mosquito (Culex pipiens); stored grain insect pests such as angoumois grai moth (Sitotroga cerealella), adzuki bean weevil (Callosobruchus chinensis), red flour beetle (Tribolium castaneum) and mealworms; household goods insect pests such as casemaking clothes moth (Tinea pellionella), black carpet beetle (Anthrenus scrophularidae) and subterranean termites; domestic mites such as mold mite (Tyrophagus putrescentiae), Dermatophagoides farinae, Chelacaropsis moorei, and so on. Further, it is effective also for controlling parasites on animals such as the animal parasitic acarina or flea. Further, the present invention provides distinct controlling effects also against various pests which are resistant to an organic phosphorus agent, a carbamate agent or a synthetic pyrethroid agent. Further, in the present invention, it is possible to control pests on foliages at the same time as controlling soil pest insects, plant parasitic mites, nematodes, pleopods or isopods by soil treatment, based on the excellent penetrative migration characteristics.

In the present invention, when a formulation is prepared by using an anthranilamide compound or its salt, a polyoxyalkylene phosphoric acid ester surfactant and a carrier, it is possible to use various adjuvants as the case requires. The adjuvants which may be used here, may be any adjuvants so long as they are commonly used in this technical field, and they may, for example, be another surfactant (surfactant other than the polyoxyalkylene phosphoric acid ester surfactant), a binder, a vegetable oil, a mineral oil, an anti-setting agent, a thickening agent, an antifoaming agent, an antifreezing agent, an antiseptics, etc.

Such preparation of a formulation may be carried out in accordance with a common method in this field, and as a formulation to be prepared by such a method may, for example, be an emulsifiable concentrate, a dust, a wettable powder, a soluble concentrate, granules, a formulation in the form of a concentrated composition such that when diluted with water, the active ingredient will precipitate as solid particles in water, an oil-based suspension concentrate or an aqueous suspension concentrate. Among such formulations, preferred is the formulation in the form of a concentrated composition such that when diluted with water, the active ingredient will precipitate as solid particles in water, an oil-based suspension concentrate or an aqueous suspension concentrate.

The above carrier is divided into a solid carrier and a liquid carrier.

The solid carrier may, for example, be an animal or vegetable powder of e.g. starch, sugar, lactose, cellulose powder, cyclodextrin, activated carbon, soybean powder, flour or milk powder; or a mineral powder of e.g. talc, kaolin, bentonite, organic bentonite, calcium carbonate, calcium sulfate, sodium bicarbonate, zeolite, diatomaceous earth, white carbon, clay, alumina or silica. The liquid carrier may, for example, be water; an alcohol such as ethyl alcohol or ethylene glycol; a ketone such as acetone, methyl ethyl ketone, methyl isobutyl ketone or isophorone; an ether such as dioxane or tetrahydrofuran; an aliphatic hydrocarbon such as kerosene, coal oil or liquid paraffin; a vegetable oil such as corn oil, soybean oil, linseed oil, sunflower oil, cotton oil, rape oil, an esterified rape oil such as Phase II, tradename (manufactured by Loveland INDUSTRIES LTD.), a methylated vegetable oil such as methylated rape oil, olive oil, castor oil, palm oil or avocado oil; an animal oil such as tallow or whale oil; a mineral oil such as machine oil, heavy oil, silicone oil, naphthene solvent, methylnaphthalene or 1-phenyl-1-xylylethane; an aromatic hydrocarbon such as xylene, trimethylbenzene, tetramethylbenzene, cyclohexane or solvent naphtha; a hydrophilic organic solvent such as N,N-dimethylformamide, N,N-dimethylacetamide, dimethylsulfoxide, cyclohexanone, γ-butyrolactone, N-methyl-2-pyrrolidone, N-octyl-2-pyrrolidone, N-dodecyl-2-pyrrolidone, tetrahydroxyfurfuryl alcohol or propylene glycol monomethyl ether; an ester such as ethyl acetate or a glycerol ester of a fatty acid; or a nitrile such as acetonitrile.

In a case where the pesticidal composition used in the present invention is formulated in the form of a concentrated composition such that when diluted with water, the active ingredient will precipitate as solid particles in water, a hydrophilic organic solvent is used as the carrier. The hydrophilic organic solvent is preferably N,N-dimethylformamide, dimethylsulfoxide, cyclohexanone, γ-butyrolactone or N-methyl-2-pyrrolidone. A suitable blend ratio of the anthranilamide compound or its salt to the hydrophilic organic solvent is usually from 1:500 to 2:1, preferably from 1:50 to 1:1, by weight ratio.

In a case where the pesticidal composition used in the present invention is formulated in the form of an oil-based suspension concentrate, at least one oil-based liquid carrier selected from the group consisting of a vegetable oil, a mineral oil and an animal oil, is used. A suitable blend ratio of the anthranilamide compound or its salt to the oil-based liquid carrier is usually from 1:500 to 1:4, preferably from 1:50 to 1:10, by weight ratio.

In a case where the pesticidal composition used in the present invention is formulated in the form of an aqueous

suspension concentrate, a suitable blend ratio of the anthranilamide compound or its salt to water is usually from 1:500 to 2:1, preferably from 1:50 to 1:1, by weight ratio.

In the present invention, other agricultural chemicals, such as insecticides, miticides, nematicides, soil pesticides or fungicides may be used as mixed or in combination, as the case requires. In such a case, further improved effects may be obtained.

The active compounds of insect pest control agents such as insecticides, miticides, nematicides or soil pesticides in the above-mentioned other agricultural chemicals, include, for example, (by common names, some of them are still in an application stage) organic phosphate compounds such as profenofos, dichlorvos, fenamiphos, fenitrothion, EPN, diazinon, chlorpyrifos-methyl, acephate, prothiofos, fosthiazate, phoshocarb, cadusafos, dislufoton, chlorpyrifos, demeton-S-methyl, dimethoate, methamidophos, imicyafos, isoxathion, isofenphos, ethion, etrimfos, quinalphos, dimethylvinphos, sulprofos, thiometon, vamidothion, pyraclofos, pyridaphenthion, pirimiphos-methyl, propaphos, phosalone, formothion, malathion, tetrachlovinphos, chlorfenvinphos, cyanophos, trichlorfon, methidathion, phenthoate, ESP, azinphos-methyl, fenthion, heptenophos, methoxychlor, paration, monocrotophos, parathion-methyl, terbufos, phospamidon, phosmet and phorate; carbamate compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC and fenothiocarb; nereistoxin derivatives such as cartap, thiocyclam, bensultap and thiosultap-sodium; organic chlorine compounds such as dicofol, tetradifon, endosulufan, dienochlor and dieldrin; organic metal compounds such as fenbutatin oxide and cyhexatin; pyrethroid compounds such as fenvalerate, permethrin, cypermethrin, deltamethrin, cyhalothrin, tefluthrin, ethofenprox, flufenprox, fenpropathrin, bifenthrin, imidate, cyfluthrin, flucythrinate, fluvalinate, cycloprothrin, lambda-cyhalothrin, pyrethrins, esfenvalerate, tetramethrin, resmethrin, protrifenbute, zeta-cypermethrin, acrinathrin, alpha-cypermethrin, allethrin, gamma-cyhalothrin, theta-cypermethrin, tau-fluvalinate, tralomethrin, profluthrin, beta-cypermethrin, beta-cyfluthrin, metofluthrin and phenothrin; benzoylurea compounds such as diflubenzuron, chlorfluazuron, teflubenzuron, flufenoxuron, lufenuron, novaluron, triflumuron, hexaflumuron, bistrifluron, noviflumuron and fluazuron; juvenile hormone-like compounds such as methoprene, pyriproxyfen, fenoxycarb and diofenolan; pyridazinone compounds such as pyridaben; pyrazole compounds such as fenpyroximate, fipronil, tebufenpyrad, ethiprole, tolfenpyrad, acetoprole, pyrafluprole and pyriprole; neonicotinoids such as imidacloprid, nitenpyram, acetamiprid, thiacloprid, thiamethoxam, clothianidin, nidinotefuran and dinotefuran; hydrazine compounds such as tebufenozide, methoxyfenozide, chromafenozide and halofenozide; pyridine compounds such as pyridaryl and flonicamid; tetronic acid compounds such as spirodiclofen; strobilurin compounds such as fluacrypyrim; pyridinamine compounds such as flufenerim; dinitro compounds; organic sulfur compounds; urea compounds; triazine compounds; hydrazone compounds; and other compounds such as buprofezin, hexythiazox, amitraz, chlordimeform, silafluofen, triazamate, pymetrozine, pyrimidifen, chlorfenapyr, indoxacarb, acequinocyl, etoxazole, cyromazine, 1,3-dichloropropene, diafenthiuron, benclothiaz, flufenrim, bifenazate, spirotetramat, propargite, verbutin, spiromesifen, thiazolylcinnanonitrile, amidoflumet, flubendiamide, clofentezine, metaflumizone, chlorantraniliprole, cyflumetofen, cyenopyrafen, pyrifluquinazon, fenazaquin, pyridaben, chlorobenzoate, sulfluramid, hydramethylnon, metaldehyde, ryanodine, HGW 86 and IKA-2000. Further, microbial agricultural chemicals such as Bacillus thuringienses aizawai, Bacillus thuringienses kurstaki, Bacillus thuringienses israelensis, Bacillus thuringienses japonensis, Bacillus thuringienses tenebrionis, insecticidal crystal protein produced by Bacillus thuringienses, insect viruses, etomopathogenic fungi, and nematophagous fungi; antibiotics or semisynthetic antibiotics such as avermectin, milbemectin, milbemycin, spinosad, emamectin-benzoate, ivermectin, lepimectin, spinetoram, abamectin and emamectin; natural products such as azadirachtin and rotenone; and repellents such as deet may, for example, be mentioned.

The fungicidal active compounds in the above-mentioned other agricultural chemicals include, for example, (by common names, some of them are still in an application stage, or test codes of Japan Plant Protection Association) anilinopyrimidine compounds such as mepanipyrim, pyrimethanil and cyprodinil; pyridinamine compounds such as fluazinam; azole compounds such as triadimefon, bitertanol, triflumizole, etaconazole, propiconazole, penconazole, flusilazole, myclobutanil, cyproconazole, tebuconazole, hexaconazole, furconazole-cis, prochloraz, metconazole, epoxiconazole, tetraconazole, oxpoconazole fumarate, sipconazole, prothioconazole, triadimenol, flutriafol, difenoconazole, fluquinconazole, fenbuconazole, bromuconazole, diniconazole, tricyclazole, probenazole, simeconazole, pefurazoate, ipconazole and imibenconazole; quinoxaline compounds such as quinomethionate; dithiocarbamate compounds such as maneb, zineb, mancozeb, polycarbamate, metiram, propineb and thiram; organic chlorine compounds such as fthalide, chlorothalonil and quintozene; imidazole compounds such as benomyl, thiophanate-methyl, carbendazim, thiabendazole, fuberiazole and cyazofamid; cyanoacetamide compounds such as cymoxanil; phenylamide compounds such as metalaxyl, metalaxyl-M, mefenoxam, oxadixyl, ofurace, benalaxyl, benalaxyl-M (another name: kiralaxyl, chiralaxyl), furalaxyl and cyprofuram; sulfenic acid compounds such as dichlofluanid; copper compounds such as cupric hydroxide and oxine copper; isoxazole compounds such as hymexazol; organophosphorus compounds such as fosetyl-Al, tolclofos-methyl, S-benzyl, O,O-diisopropylphosphorothioate, O-ethyl, S,S-diphenylphosphorodithioate, aluminum ethylhydrogen phosphonate, edifenphos and iprobenfos; N-halogenothioalkyl compounds such as captan, captafol and folpet; dicarboximide compounds such as procymidone, iprodione and vinclozolin; benzanilide compounds such as flutolanil, mepronil, zoxamid

and tiadinil; anilide compounds such as carboxin, oxycarboxin, thifluzamide, penthiopyrad, boscalid, bixafen, fluopyram and isotianil; piperazine compounds such as triforine; pyridine compounds such as pyrifenox; carbinol compounds such as fenarimol and flutriafol; piperidine compounds such as fenpropidine; morpholine compounds such as fenpropimorph, spiroxamine and tridemorph; organotin compounds such as fentin hydroxide and fentin acetate; urea compounds such as pencycuron; cinnamic acid compounds such as dimethomorph and flumorph; phenylcarbamate compounds such as diethofencarb; cyanopyrrole compounds such as fludioxonil and fenpiclonil; strobilurin compounds such as azoxystrobin, kresoxim-methyl, metominofen, trifloxystrobin, picoxystrobin, oryzastrobin, dimoxystrobin, pyraclostrobin, fluoxastrobin and fluacrypyrim; oxazolidinone compounds such as famoxadone; thiazolecarboxamide compounds such as ethaboxam; silylamide compounds such as silthiopham; aminoacid amidecarbamate compounds such as iprovalicarb, benthiavalicarb-isopropyl and valiphenal; imidazolidine compounds such as fenamidone; hydroxanilide compounds such as fenhexamid; benzenesulfonamide compounds such as flusulfamide; oxime ether compounds such as cyflufenamid; phenoxyamide compounds such as fenoxanil; anthraquinone compounds; crotonic acid compounds; antibiotics such as validamycin, kasugamycin and polyoxins; guanidine compounds such as iminoctadine; and other compounds such as pyribencarb, isoprothiolane, pyroquilon, diclomezine, quinoxyfen, propamocarb hydrochloride, chloropicrin, dazomet, metam-sodium, nicobifen, metrafenone, UBF-307, diclocymet, proquinazid, amisulbrom (another name: amibromdole), mandipropamid, fluopicolide, carpropamid, meptyldinocap, BCF051, BCM061, BCM062 and AF0201.

In the present invention, the blend ratio of the anthranilamide compound or its salt to the polyoxyalkylene phosphoric acid ester surfactant is from 10:1 to 1:1,000, more preferably from 10:1 to 1:100, further preferably from 2:1 to 1:50, by weight ratio.

In the present invention, the concentration of the anthranilamide compound or its salt, and the polyoxyalkylene phosphoric acid ester surfactant can not be generally defined, since it may vary depending upon various conditions such as the objective crop plant, the application method, the formulation, the dose, etc. However, for example, in the case of foliar treatment, the concentration of the anthranilamide compound or its salt is usually from 0.01 to 10,000 ppm, preferably from 0.01 to 1,000 ppm and the concentration of the polyoxyalkylene phosphoric acid ester surfactant is usually from 0.01 to 10,000 ppm. In the case of soil treatment, the dose of the anthranilamide compound or its salt is usually from 0.01 to 100 kg/ha, preferably from 0.01 to 10 kg/ha, and the dose of the polyoxyalkylene phosphoric acid ester surfactant is usually from 0.01 to 100 kg/ha.

A method of applying the pesticidal composition used in the present invention in the form of an aqueous dispersion to a pest, may be mentioned. In such a method, the pesticidal composition in the form of an aqueous dispersion is sprayed to a site where the pest germinates or is expected to germinate. The site for such spraying may be the foliage of an agricultural or horticultural plant, soil, etc. It is particularly effective that the aqueous dispersion is applied to the foliage of an agricultural or horticultural plant.

## EXAMPLES

Now, the present invention will be described with reference to Examples. The compositions of Examples 4 to 6 can be used in the method of the invention. However, it should be understood that the present invention is by no means thereby restricted.

In the following, Compound 1 is 3-bromo-N-(2-bromo-4-chloro-6-(1-cyclopropylethylcarbamoyl)phenyl)-1-(3-chloropyridin-2-yl)-1H-pyrazole-5-carboxamide.

### EXAMPLE 1 (Comparative)

(1) Compound 1: 5 wt%
(2) Mixture of polyoxyethylene styrylphenyl ether, polyoxyethylene alkylaryl ether and alkylaryl sulfonate (tradename: SORPOL 2806 B, manufactured by Toho Chemical Industry Co., Ltd.): 5 wt%
(3) N,N-dimethylacetamide: 90 wt%

The above components are mixed, and the obtained solution is diluted 2,000 times or 4,000 times with water containing a polyoxyethylene alkyl ether phosphoric acid ester, followed by spraying (active ingredient concentration: 25 ppm or 12.5 ppm).

### EXAMPLE 2 (Comparative)

(1) Compound 1: 5 wt%
(2) Propylene glycol: 10 wt%
(3) Potassium salt of polyoxyethylene tristyrylphenyl ether phosphoric acid ester (tradename: SOPROPHOR FLK/70, manufactured by Rhodia Nicca, Ltd.): 3 wt%
(4) Aluminum magnesium silicate (tradename: Veegum, manufactured by Sanyo Chemical Industries, Ltd.): 1 wt%
(5) Antifoaming agent (tradename: RHODOSIL 432, manufactured by Rhodia Nicca, Ltd.): 0.5 wt%
(6) Water: 80.5 wt%

To a mixture of the above components, zirconia beads are added, followed by pulverization for 16 minutes by a wet pulverizer (DYNO-MILL: KDL model, manufactured by Shinmaru Enterprises Corp.). Then, beads are removed by filtration to obtain a suspension. This suspension is diluted 2,000 times or 4,000 times with water containing a polyoxyethylene alkyl ether phosphoric acid ester, followed by spraying (active ingredient concentration: 25 ppm or 12.5 ppm).

EXAMPLE 3 (Comparative)

(1) Compound 1: 5 wt%
(2) Mixture of polyoxyethylene alkylaryl ether sulfuric acid ester · ammonium salt and polyoxyethylene alkyl ether (tradename: SORPOL 5073, manufactured by Toho Chemical Industry Co., Ltd.): 2.5 wt%
(3) Sodium alkylbenzene sulfonate (tradename: SORPOL 5060, manufactured by Toho Chemical Industry Co., Ltd.): 2 wt%
(4) Polyoxyethylene dodecylphenyl ether (tradename: Noigen EA-33, manufactured by Dai-ichi Kogyo Seiyaku Co., Ltd.): 1 wt%
(5) White carbon (tradename: Caplex CS-7, manufactured by Evonik Degussa Japan, Co., Ltd.): 15 wt%
(6) Clay: 74.5 wt%

The above components are mixed, followed by mixing and pulverization by a centrifugal pulverizer (manufactured by NIHONSEIKI KAISHA LTD., 1 mm $\phi$ screen, 10,000 rpm) to obtain a wettable powder. The wettable powder is diluted 2,000 times or 4,000 times with water containing a polyoxyethylene alkyl ether phosphoric acid ester, followed by spraying (active ingredient concentration: 25 ppm or 12.5 ppm).

EXAMPLE 4

5.3 g of Compound 1 and 20.0 g of a polyoxyalkylene phosphoric acid ester surfactant are dissolved in 74.7 g of N,N-dimethylacetamide to obtain 100 g of a transparent liquid composition containing 5 wt% of Compound 1.

EXAMPLE 5

5.3 g of Compound 1 is mixed with 10.0 g of a polyoxyethylene alkyl ether phosphoric acid ester (PHOSPHANOL RS-610, manufactured by Toho Chemical Industry Co., Ltd.), 10 g of a surfactant (tradename: SORPOL 4300, manufactured by Toho Chemical Industry Co., Ltd.), 2 g of an anti-settling agent (tradename: New D Orben, manufactured by Shiraishi Kogyo) and 72.7 g of methylated rapeseed oil (tradename: Agnique ME 18RD-F, manufactured by Cogis), followed by pulverization by a wet grinding mill (manufactured by Shinmaru Enterprises Corp., DYNO-MILL: KDL model) to obtain an oil-based suspension concentrate containing 5 wt% of Compound 1.

EXAMPLE 6

5.3 g of Compound 1 is mixed with 10.0 g of a polyoxyethylene alkyl ether phosphoric acid ester (PHOSPHANOL RS-610, manufactured by Toho Chemical Industry Co., Ltd.), 1.5 g of a surfactant (tradename: Soprophor FLK-70, manufactured by Rhodia Nicca, Ltd.), 20 g of isopropanol, 1 g of an anti-settling agent (tradename: Veegum, manufactured by Sanyo Chemical Industries, Ltd.), 0.1 g of an antifoaming agent (tradename: Rhodasil 432, manufactured by Rhodia Nicca, Ltd.) and 52.1 g of water, followed by pulverization by a wet pulverizer (manufactured by Shinmaru Enterprises Corp. DYNO-MILL: KDL model) to obtain a slurry, to which a mixed solution containing 1.5% of a thickening agent (tradename: Rhodopol 23, manufactured by Rhodia Nicca, Ltd.) and 1.0% of an antiseptic (tradename: Proxel GXL, manufactured by Arch Chemicals, Japan, Inc.) is mixed 10% to obtain an aqueous suspension concentrate containing 5 wt% of Compound 1.

TEST EXAMPLE 1

Test on controlling effects against serpentine leaf miner

Kidney bean planted in a pot having a diameter of 7 cm was put in a breeding case wherein adults of serpentine leaf miner (Liriomyza trifolii) were released and permitted to lay eggs for 2 days. Thereafter, the test plant was taken out and left for 1 day, and then, a water-diluted liquid containing 100 ppm or 250 ppm of the polyoxyethylene alkyl ether phosphoric acid ester prepared in the above Example 1, was sprayed twice on each of the front and rear sides of the Kidney bean leaf by means of a hand spray. After drying in air, the Kidney bean was left to stand for 5 days in an illuminated constant temperature chamber at 25°C, whereupon the number of pupae on each leaf was counted, and the protective value was calculated by the following formula. The test was repeated twice. As the polyoxyethylene alkyl ether phosphoric acid ester, PHOSPHANOL RD-510Y, PHOSPHANOL RS-610 and PHOSPHANOL RS-710 (manufactured by Toho Chemical Industry Co., Ltd.) and ADEKA COL PS-440E (manufactured by ADEKA) were used.
For the purpose of comparison, a water-diluted liquid having no polyoxyethylene alkyl ether phosphoric acid ester added, was prepared, and spray treatment was carried out in the same manner.
The results of the test are shown in Tables 1 and 2.

$$\text{Protective value (\%)} = (1-(\text{the number of pupae at treated section}/\text{the number of pupae at untreated section}))\times 100$$

TABLE 1

| | Compound 1 | Polyoxyethylene alkyl ether phosphoric acid ester | | Protective value (%) |
|---|---|---|---|---|
| | Concentration (ppm) | Tradename | Concentration (ppm) | |
| Section of the present invention | 25 | PS-440E | 250 | 100 |
| | | | 100 | 100 |
| | | RD-510Y | 250 | 100 |
| | | RS-610 | 250 | 100 |
| | | RS-710 | 250 | 100 |
| Comparative section | 25 | - | | 0 |

TABLE 2

| | Compound 1 | Polyoxyethylene alkyl ether phosphoric acid ester | | Protective value (%) |
|---|---|---|---|---|
| | Concentration (ppm) | Tradename | Concentration (ppm) | |
| Section of the present invention | 12.5 | PS-440E | 250 | 100 |
| | | | 100 | 100 |
| | | RD-510Y | 250 | 70 |
| | | RS-610 | 250 | 100 |
| | | RS-710 | 250 | 100 |
| Comparative section | 12.5 | - | | 0 |

TEST EXAMPLE 2

Test on controlling effects against serpentine leaf miner

Kidney bean planted in a pot having a diameter of 7 cm was put in a breeding case wherein adults of serpentine leaf miner were released and permitted to lay eggs for 2 days. Thereafter, the test plant was taken out and left for 1 day, and then, a water-diluted liquid containing 50 ppm of a polyoxyethylene arylether phosphoric acid ester, prepared by replacing the polyoxyethylene alkyl ether phosphoric acid ester in the above Example 1 by a polyoxyethylene arylether phosphoric acid ester, was sprayed twice on each of the front and rear sides of the Kidney bean leaf by means of a hand spray. After drying in air, the Kidney bean was left to stand for 5 days in an illuminated constant temperature chamber at 25°C, whereupon the number of pupae on each leaf was counted, and the protective value was calculated in the same manner as in Test Example 1. The test was repeated twice. As the polyoxyethylene arylether phosphoric acid ester, and ADEKA COL CS-1361E (manufactured by ADEKA) was used.

For the purpose of comparison, a water-diluted liquid n having no polyoxyethylene arylether phosphoric acid ester added, was prepared, and spray treatment was carried out in the same manner.

The results of the test are shown in Tables 3 and 4.

TABLE 3

| | Compound 1 | Polyoxyethylene arylether phosphoric acid ester | | Protective value (%) |
|---|---|---|---|---|
| | Concentration (ppm) | Tradename | Concentration (ppm) | |
| Section of the present invention | 25 | CS-1361E | 50 | 100 |
| Comparative section | 25 | - | | 50 |

TABLE 4

| | Compound 1 | Polyoxyethylene arylether phosphoric acid ester | | Protective value (%) |
|---|---|---|---|---|
| | Concentration (ppm) | Tradename | Concentration (ppm) | |
| Section of the present invention | 12.5 | CS-1361E | 50 | 100 |
| Comparative section | 12.5 | - | | 0 |

TEST EXAMPLE 3

Test on controlling effects against serpentine leaf miner

Kidney bean planted in a pot having a diameter of 7 cm was put in a breeding case wherein adults of serpentine leaf miner were released and permitted to lay eggs for 2 days. Thereafter, the test plant was taken out and left for 2 days, the liquid composition obtained in accordance with the above Example 4 was diluted with water to prepare a test liquid containing 50 ppm or 100 ppm of the polyoxyalkylene phosphoric acid ester surfactant. Each test liquid was a suspension solution having fine particles uniformly dispersed. The suspension solution was sprayed twice on each of the front and rear sides of the Kidney bean leaf by means of a hand spray. After drying in air, the Kidney bean was left to stand for 5 days in an illuminated constant temperature chamber at 25°C, whereupon the number of pupae on each leaf was counted, and the protective value was calculated in the same manner as in Test Example 1. The test was repeated twice. As the polyoxyalkylene phosphoric acid ester surfactant, ADEKA COL PS-440E (manufactured by ADEKA) and PHOSPHANOL RS-610 (manufactured by Toho Chemical Industry, Co., Ltd.) as polyoxyethylene alkyl ether phosphoric acid esters, and ADEKA COL CS-1361E (manufactured by ADECA) as a polyoxyethylene arylether phosphoric acid ester were used.

For the purpose of comparison, a water-diluted liquid having no polyoxyethylene alkyl ether phosphoric acid

ester added, was prepared, and spray treatment was carried out in the same manner.

The results of the test are shown in Tables 5 and 6.

TABLE 5

| | Compound 1 | Polyoxyalkylene phosphoric acid ester surfactant | | Protective value (%) |
|---|---|---|---|---|
| | Concentration (ppm) | Tradename | Concentration (ppm) | |
| Section of the present invention | 12.5 | PS-440E | 50 | 77 |
| | | RS-610 | 50 | 89 |
| Comparative section | 12.5 | - | | 0 |

TABLE 6

| | Compound 1 | Polyoxyalkylene phosphoric acid ester surfactant | | Protective value (%) |
|---|---|---|---|---|
| | Concentration (ppm) | Tradename | Concentration (ppm) | |
| Section of the present invention | 25 | CS-1361E | 100 | 100 |
| Comparative section | 25 | - | | 46 |

INDUSTRIAL APPLICABILITY

The method of the present invention is capable of improving the pesticidal effects of an anthranilamide compound, makes it possible to control pests at a lower dose and further makes it possible to reduce the dose of the active agent, whereby the environmental load at the application site and around it can be remarkably reduced. Thus, it is very useful for agriculture or horticulture.

**Claims**

1. A method for improving the pesticidal effects of an anthranilamide compound or its salt as an active ingredient, by means of a polyoxyalkylene phosphoric acid ester surfactant; wherein the blend ratio of the anthranilamide compound or its salt to the polyoxyalkylene phosphoric acid ester surfactant is from 10:1 to 1:1000 by weight ratio, wherein the polyoxyalkylene phosphoric acid ester surfactant is one represented by the following formula (II), (III) or (IV):

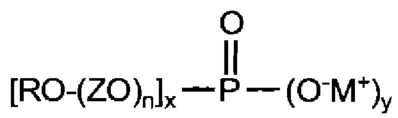

(II)

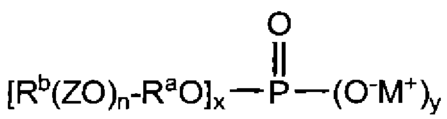

(III)

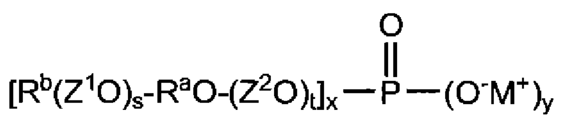

(IV)

wherein

each of R and $R^b$ which are independent of each other, is alkyl or phenyl which may be substituted by alkyl,
each of $R^a$, Z, $Z^1$ and $Z^2$ which are independent of one another, is alkylene,
$M^+$ is a hydrogen ion, a metal ion, ammonium or organic ammonium,
each of n, s and t which are independent of one another, is an integer of at least 1,
x and y satisfy x+y=3, and
x is an integer of 1, 2 or 3, and y is an integer of 0, 1 or 2;
wherein, when x is at least 2, a plurality of R, $R^a$, $R^b$, Z, $Z^1$, $Z^2$ or n contained in $[RO(ZO)_n]$, $[R^b(ZO)_nR^aO]$ or $[R^b(Z^1O)_sR^aO(Z^2O)_t]$ may be the same or different from one another,
when y is 2, the two $M^+$ may be the same or different from each other, and
in the formula (IV), $Z^1$ and $Z^2$ may be the same or different from each other, and wherein the anthranilamide compound is 3-bromo-N-(2-bromo-4-chloro-6-(1-cyclopropylethylcarbamoyl)phenyl)-1-(3-chloropyridin-2-yl)-1H-pyrazol-5-carboxamide, 3-bromo-N-(4-chloro-2-(1-cyclopropylethylcarbamoyl)-6-methylphenyl)-1-(3-chloropyridin-2-yl)-1H-pyrazol-5-carboxamide, 3-bromo-N-(2-bromo-4-chloro-6-(cyclopropylmethylcarbamoyl)phenyl)-1-(3-chloropyridin-2-yl)-1H-pyrazol-5-carboxamide, 3-bromo-N-(4-chloro-2-methyl-6-(methylcarbamoyl)phenyl)-1-(3-chloropyridin-2-yl)-1H-pyrazol-5-carboxamide or 3-bromo-1-(3-chloropyridin-2-yl)-N-(4-cyano-2-methyl-6-(methylcarbamoyl)phenyl)-1H-pyrazol-5-carboxamide.

2. The method according to Claim 1, wherein the anthranilamide compound is 3-bromo-N-(2-bromo-4-chloro-6-(1-cyclopropylethylcarbamoyl)phenyl)-1-(3-chloropyridin-2-yl)-1H-pyrazol-5-carboxamide.

3. The method according to Claim 1, wherein the blend ratio of the anthranilamide compound or its salt to the polyoxyalkylene phosphoric acid ester surfactant is from 10:1 to 1:100, preferably from 2:1 to 1:50, by weight ratio.

4. The method according to Claim 1, wherein the polyoxyalkylene phosphoric acid ester surfactant is one represented by the following formula (II):

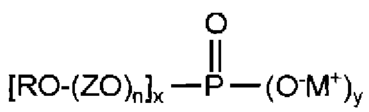

(II)

wherein

each of R which are independent of each other, is alkyl or phenyl which may be substituted by alkyl,
each of Z which are independent of one another, is alkylene,
$M^+$ is a hydrogen ion, a metal ion, ammonium or organic ammonium,
n is an integer of at least 1,
x and y satisfy x+y=3, and
x is an integer of 1, 2 or 3, and y is an integer of 0, 1 or 2;
wherein, when x is at least 2, a plurality of R, Z or n contained in $[RO(ZO)_n]$ may be the same or different from one another,
and when y is 2, the two $M^+$ may be the same or different from each other.

## Patentansprüche

1. Verfahren zur Verbesserung der Pestizidwirkungen einer Anthranilamid-Verbindung oder deren Salz als Wirkstoff, mittels eines Polyoxyalkylenphosphorsäureester-Tensids, wobei das Mischungsverhältnis der Anthranilamid-Verbindung oder deren Salz zu dem Polyoxyalkylenphosphorsäureester-Tensid von 10:1 bis 1:1000, nach Gewichtsverhältnis, beträgt, wobei das Polyoxyalkylenphosphorsäureester-Tensid eines der folgenden Formel (II), (III) oder (IV) ist:

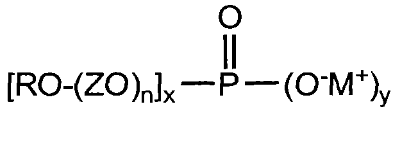

(II)

$$[R^b(ZO)_n\text{-}R^aO]_x - \overset{\overset{\displaystyle O}{\|}}{P} - (O^-M^+)_y \qquad \text{(III)}$$

$$[R^b(Z^1O)_s\text{-}R^aO\text{-}(Z^2O)_t]_x - \overset{\overset{\displaystyle O}{\|}}{P} - (O^-M^+)_y \qquad \text{(IV)}$$

wobei

jedes von R und $R^b$, die voneinander unabhängig sind, für Alkyl oder Phenyl steht, das mit Alkyl substituiert sein kann,
jedes von $R^a$, Z, $Z^1$ und $Z^2$, die voneinander unabhängig sind, für Alkylen steht,
$M^+$ für ein Wasserstoffion, ein Metallion, Ammonium oder organisches Ammonium steht, jedes n, s und t, die voneinander unabhängig sind, für eine ganze Zahl von wenigstens 1 steht,
x und y x+y=3 erfüllen, und
x für eine ganze Zahl von 1, 2 oder 3 steht und y für eine ganze Zahl von 0, 1 oder 2 steht;
wobei, wenn x wenigstens 2 ist, eine Vielzahl von R, $R^a$, $R^b$, Z, $Z^1$, $Z^2$ oder n, die in $[RO(ZO)_n]$, $[R^b(ZO)_nR^aO]$ oder $[R^b(Z^1O)_sR^aO(Z^2O)_t]$ enthalten sind, gleich oder voneinander verschieden sein können,
wenn y für 2 steht, die beiden $M^+$ gleich oder voneinander verschieden sein können und in der Formel (IV) $Z^1$ und $Z^2$ gleich oder voneinander verschieden sein können, und
wobei the Anthranilamid-Verbindung 3-Brom-N-(2-brom-4-chlor-6-(1-cyclopropylethylcarbamoyl)phenyl)-1-(3-chlorpyridin-2-yl)-1H-pyrazol-5-carboxamid, 3-Brom-N-(4-chlor-2-(1-cyclopropylethylcarbamoyl)-6-methylphenyl)-1-(3-chlorpyridin-2-yl)-1H-pyrazol-5-carboxamid, 3-Brom-N-(2-brom-4-chlor-6-(cyclopropylmethylcarbamoyl)phenyl)-1-(3-chlorpyridin-2-yl)-1H-pyrazol-5-carboxamid, 3-Brom-N-(4-chlor-2-methyl-6-(methylcarbamoyl)phenyl)-1-(3-chlorpyridin-2-yl)-1H-pyrazol-5-carboxamid oder 3-Brom-1-(3-chlorpyridin-2-yl)-N-(4-cyano-2-methyl-6-(methylcarbamoyl)phenyl)-1H-pyrazol-5-carboxamid ist.

2. Verfahren nach Anspruch 1, wobei the Anthranilamid-Verbindung 3-Brom-N-(2-brom-4-chor-6-(1-cyclopropylethylcarbamoyl)phenyl)-1-(3-chlorpyridin-2-yl)-1H-pyrazol-5-carboxamid ist.

3. Verfahren nach nach Anspruch 1, wobei das Mischungsverhältnis der Anthranilamid-Verbindung oder deren Salz zu dem Polyoxyalkylenphosphorsäureester-Tensid von 10:1 bis 1:100, bevorzugt von 2:1 bis 1:50, nach Gewichtsverhältnis, betragen kann.

4. Verfahren nach nach Anspruch 1, wobei das Polyoxyalkylenphosphorsäureester-Tensid eines der folgenden Formel (II) ist:

$$[RO\text{-}(ZO)_n]_x - \overset{\overset{\displaystyle O}{\|}}{P} - (O^-M^+)_y \qquad \text{(II)}$$

wobei

jedes von R, die voneinander unabhängig sind, für Alkyl oder Phenyl steht, das mit Alkyl substituiert sein kann,
jedes von Z, die voneinander unabhängig sind, für Alkylen steht,
$M^+$ für ein Wasserstoffion, ein Metallion, Ammonium oder organisches Ammonium steht,
n für eine ganze Zahl von wenigstens 1 steht,
x und y x+y=3 erfüllen, und
x für eine ganze Zahl von 1, 2 oder 3 steht und y für eine ganze Zahl von 0, 1 oder 2 steht;
wobei, wenn x wenigstens 2 ist, eine Vielzahl von R, Z oder n, die in $[RO(ZO)_n]$ enthalten sind, gleich oder voneinander verschieden sein können,
und wenn y für 2 steht, die beiden $M^+$ gleich oder voneinander verschieden sein können.

## Revendications

**1.** Procédé pour améliorer les effets pesticides d'un composé anthranilamide ou de son sel servant d'agent actif, au moyen d'un tensioactif de type ester d'acide phosphorique polyoxyalkyléné ;
dans lequel le rapport de mélange du composé anthranilamide ou de son sel sur le tensioactif de type ester d'acide phosphorique polyoxyalkyléné est un rapport en poids de 10/1 à 1/1000,
dans lequel le tensioactif de type ester d'acide phosphorique polyoxyalkyléné est représenté par l'une des formules (II), (III) et (IV) suivantes :

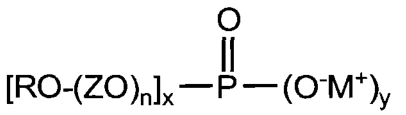 (II)

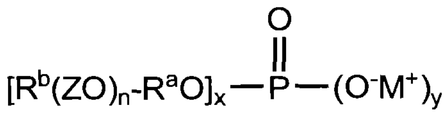 (III)

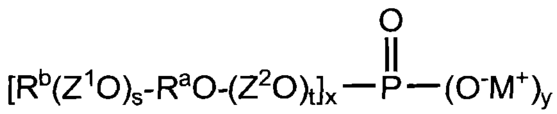 (IV)

dans lesquelles

chacun de R et $R^b$, qui sont indépendants l'un de l'autre, est un alkyle ou phényle qui peut être substitué par alkyle,
chacun de $R^a$, Z, $Z^1$ et $Z^2$, qui sont indépendants les uns des autres, est un alkylène,
$M^+$ est un ion hydrogène, un ion métallique, l'ammonium ou un ammonium organique,
chacun de n, s et t, qui sont indépendants les uns des autres, est un entier valant au moins 1,
x et y satisfont à $x + y = 3$, et
x est l'entier 1, 2 ou 3, et y est l'entier 0, 1 ou 2 ;
dans laquelle, quand x vaut au moins 2, plusieurs R, $R^a$, $R^b$, Z, $Z^1$, $Z^2$ ou n contenus dans $[RO(ZO)_n]$, $[R^b(ZO)_nR^a]$ ou $[R^b(Z^1O)_sR^aO(Z^2O)_t]$ peuvent être identiques ou différents,
quand y vaut 2, les deux $M^+$ peuvent être identiques ou différents, et
dans la formule (IV), $Z^1$ et $Z^2$ peuvent être identiques ou différents, et
dans lequel le composé anthranilamide est le 3-bromo-N-(2-bromo-4-chloro-6-(1-cyclopropyléthylcarbamoyl)phényl)-1-(3-chloropyridin-2-yl)-1H-pyrazole-5-carboxamide, le 3-bromo-N-(4-chloro-2-(1-cyclopropyléthylcarbamoyl)-6-méthylphényl)-1-(3-chloropyridin-2-yl)-1H-pyrazole-5-carboxamide, le 3-bromo-N-(2-bromo-4-chloro-6-(cyclopropylméthylcarbamoyl)phényl)-1-(3-chloropyridin-2-yl)-1H-pyrazole-5-carboxamide, le 3-bromo-N-(4-chloro-2-méthyl-6-(méthylcarbamoyl)phényl)-1-(3-chloropyridin-2-yl)-1H-pyrazole-5-carboxamide ou le 3-bromo-1-(3-chloropyridin-2-yl)-N-(4-cyano-2-méthyl-6-(méthylcarbamoyl)phényl)-1H-pyrazole-5-carboxamide.

**2.** Procédé selon la revendication 1, dans lequel le composé anthranilamide est le 3-bromo-N-(2-bromo-4-chloro-6-(1-cyclopropyléthylcarbamoyl)phényl)-1-(3-chloropyridin-2-yl)-1H-pyrazole-5-carboxamide.

**3.** Procédé selon la revendication 1, dans lequel le rapport de mélange du composé anthranilamide ou de son sel sur le tensioactif de type ester d'acide phosphorique polyoxyalkyléné est un rapport en poids de 10/1 à 1/100, de préférence de 2/1 à 1/50.

**4.** Procédé selon la revendication 1, dans lequel le tensioactif ester d'acide phosphorique polyoxyalkyléné est représenté par la formule (II) suivante :

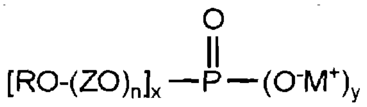 (II)

dans laquelle

chaque R est indépendamment un alkyle ou phényle qui peut être substitué par alkyle,
chaque Z est indépendamment un alkylène,
$M^+$ est un ion hydrogène, un ion métallique, l'ammonium ou un ammonium organique,
n est un entier valant au moins 1,
x et y satisfont à $x + y = 3$, et
x est l'entier 1, 2 ou 3, et y est l'entier 0, 1 ou 2 ;
dans laquelle, quand x vaut au moins 2, plusieurs R, Z ou n contenus dans $[RO(ZO)_n]$ peuvent être identiques ou différents, et quand y vaut 2, les deux $M^+$ peuvent être identiques ou différents.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005077934 A
- WO 2007081553 A
- WO 2009113712 A2
- WO 2009002856 A1
- EP 1717237 A1
- WO 2007020877 A1
- WO 2006080311 A1
- WO 2006040113 A2
- EP 252824 A1
- US 4770694 A
- GB 2157952 A